# EUROPEAN PATENT APPLICATION

(11) **EP 4 691 751 A1**
(43) Date of publication of application: **11.02.2026**
(21) Application number: 25179317.0
(22) Date of filing: 28.05.2025
(51) Int. Cl.: B30B 15/02, B22F 3/02

(54) **ISOLATOR UNIT**

(30) Priority: 05.08.2024 JP 2024129071
(71) Applicant: Kikusui Seisakusho Ltd., Nakagyo-ku Kyoto-shi Kyoto 604-8483 (JP)
(72) Inventor: SUZUKI, Hiroshi, Kyoto, 604-8483 (JP); OKUMOTO, Kazutaka, Kyoto, 604-8483 (JP)
(74) Representative: TBK

(57) **Abstract**

An isolator unit (1) includes a housing (11) enclosing an internal space, a door configured to close an opening of the housing (11) to isolate the internal space of the housing (11) from outside, a die (3) disposed in the internal space of the housing (11) and filled with a powdery material (7), a punch (24) disposed in the internal space of the housing (11) and fitted into the die (3), a compression rod (2) inserted to the internal space of the housing (11) and including a proximal end (22) exposed from the housing (11) to receive pressure applied from a separately provided compressor (6), and a distal end configured to compress the powdery material (7) in the die (3) via the punch (24), and a fixture (222) configured to fix the proximal end (22) of the compression rod (2) to the housing (11) in a state where the proximal end (22) of the compression rod (2) is pressed by the separately provided compressor (6) to compress the powdery material (7) in the die (3) via the punch (24).

## Description

### Field of the Invention

The invention relates to an isolator unit used for manufacture of a molded product obtained by compressing a powdery material.

### Background of the Invention

A known compression molding machine includes a vertically penetrating die as well as an upper punch and a lower punch disposed to face a die bore of the die. The compression molding machine is configured to fill the die bore with a powdery material and compress the powdery material with use of the upper punch and the lower punch being paired to obtain a molded product (e.g., Japanese Patent No. 6266367, and "CRUX033L product guide", [online], KIKUSUI SEISAKUSHO LTD., [searched on June 1, 2024], see the Internet <URL:
https://www.kikusui.com/en/Products/Details/5/CRUX-3L-Multi-function-single-stroke-tablet-press>). The compression molding machine of this type is used to preproduce or mass-produce pharmaceutical tablets, food products, electronic components, nuclear fuel pellets, and the like.

Some powdery material as a material for a molded product is unpreferred to be exposed to outdoor air (the powdery material may react with oxygen or moisture to be degenerated), or is undesired to leak outside (the powdery material may adversely affect human bodies).

When such a powdery material is compression molded to obtain a molded product, a hand press to be manually operated needs to be disposed in an environmentally controlled isolator for operation, a ready-made compression molding machine needs to be specified to be contained (containment), or a large isolator needs to be prepared to accommodate a compression molding machine.

However, a manually operated hand press inevitably causes variation of pressure applied to compress the powdery material in the die as well as thickness of the molded product. Meanwhile, enormous cost is required for specifying to contain a compression molding machine or preparing a large isolator.

### Summary of the Invention

The invention intends to provide a simplified isolator unit that is configured to generally or substantially completely isolate from outside, a die to be filled with a powdery material and a punch configured to compress the powdery material, and that can obtain a molded product of appropriate quality by compressing the powdery material by means of an external compressor.

The invention provides an isolator unit including: a housing enclosing an internal space; a door configured to close an opening of the housing to isolate the internal space of the housing from outside; a die disposed in the internal space of the housing and filled with a powdery material; a punch disposed in the internal space of the housing and fitted into the die; a compression rod inserted to the internal space of the housing and including a proximal end exposed from the housing to receive pressure applied from a separately provided compressor, and a distal end configured to compress the powdery material in the die via the punch; and a fixture configured to fix the proximal end of the compression rod to the housing in a state where the proximal end of the compression rod is pressed by the separately provided compressor to compress the powdery material in the die via the punch. A powdery material is an aggregate of minute solids and conceptually includes an aggregate of particles such as so-called granules and an aggregate of powder smaller than such particles. A mixture of a plurality of powdery materials also corresponds to a powdery material.

The isolator unit generally or substantially completely isolates from outside, the die to be filled with the powdery material and the punch configured to compress the powdery material, to inhibit the powdery material from being exposed to outdoor air and from leaking outside. Furthermore, the isolator unit can cause the punch to compression mold the powdery material in the die by means of the external compressor, as well as can keep for a long period of time the state of compressing the powdery material with use of the fixture.

The isolator unit is conveyable by a hand of a person and further includes a handle gripped by a person when conveyed. The isolator unit can thus be brought into a so-called glove box (a sealed container designed to allow entry of only human hands so as to enable work under a condition isolated from outdoor air; gloves are directly connected to side surfaces of the box to enable work in the box with the hands inserted to the gloves) and enables work of filling the die with the powdery material and work of ejecting the molded product compression molded in the die.

The isolator unit further includes a guide shaft extending in parallel with the compression rod, integrally and firmly coupled to the compression rod, and slidable along with the compression rod relatively to the housing. This configuration facilitates pressing the compression rod by means of the external compressor to appropriately compress the powdery material in the die with the distal end via the punch. If the guide shaft is equipped with a known linear gauge, the molded product compression molded in the die can be actually measured or controlled in thickness.

It is also preferred that the housing and the die as well as the housing and the punch are electrically insulated. This is specifically useful when the powdery material as a material for an all-solid-state battery is compressed to be molded in the die in the internal space of the housing.

### Effects of the Invention

The invention achieves a simplified isolator unit that is configured to generally or substantially completely isolate from outside, a die to be filled with a powdery material and a punch configured to compress the powdery material, and that can obtain a molded product of appropriate quality by compressing the powdery material by means of an external compressor.

### Brief description of the drawings

Fig. 1 is a perspective view of an isolator unit according to an embodiment of the invention.
Fig. 2 is an exploded perspective view of the isolator unit according to the embodiment, the isolator unit including a door opened.
Fig. 3 is a perspective view of the isolator unit according to the embodiment, the isolator unit being installed in a compressor.
Fig. 4 is a front sectional view showing an internal structure of the isolator unit according to the embodiment.
Fig. 5 is another front sectional view showing the internal structure of the isolator unit according to the embodiment.

### Description of the preferred embodiment

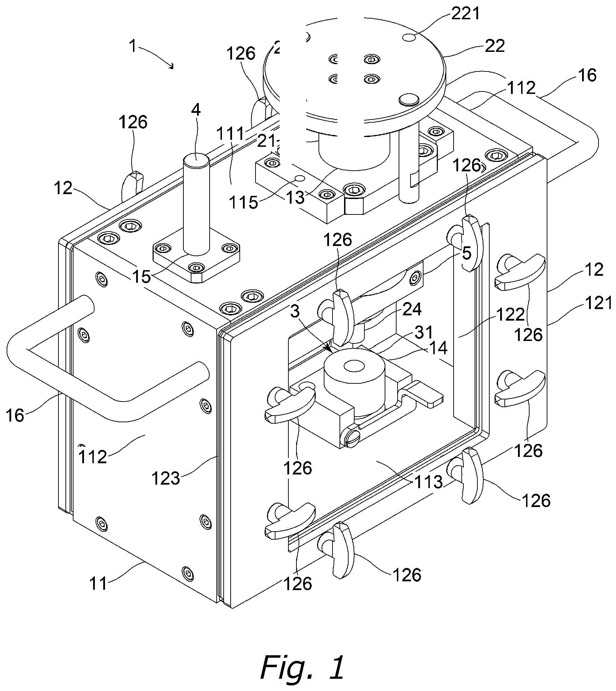

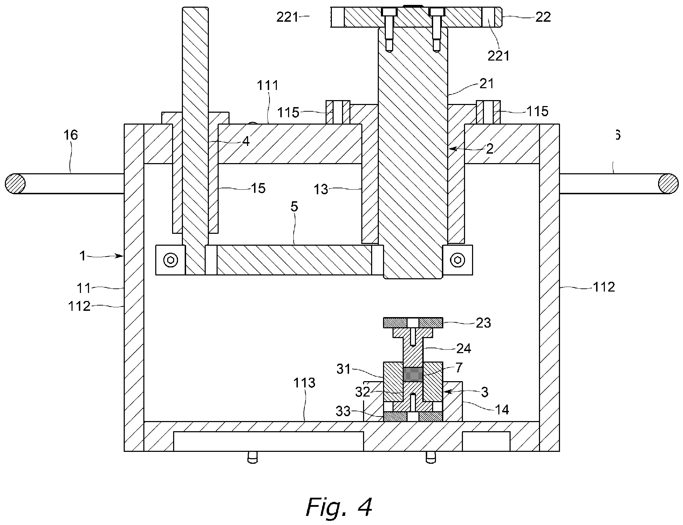

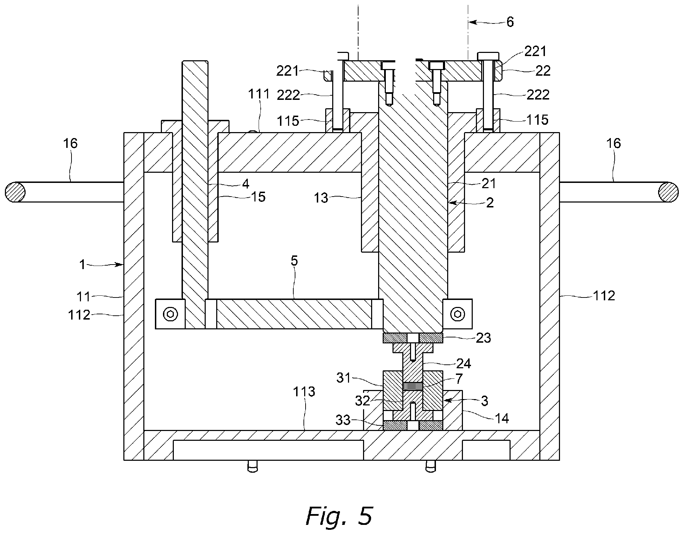

An embodiment of the invention will now be described with reference to the drawings. Figs. 1 to 5 show an isolator unit 1 according to the embodiment. The isolator unit 1 includes a housing 11 enclosing an internal space, a door 12 configured to close an opening of the housing 11 to isolate the internal space of the housing 11 from outside, a die 3 disposed in the internal space of the housing 11 and filled with a powdery material 7, a compression rod 2 inserted to the internal space of the housing 11, and having a distal end including a punch 24 to be fitted into the die 3, and a proximal end 22 exposed from the housing 11, and a fixture 222 configured to fix the proximal end 22 of the compression rod 2 to the housing 11. The fixture 222 is shown in Fig. 5.

The isolator unit 1 is used to compression mold the powdery material 7 as a material for an all-solid-state battery to preproduce a molded product as a constituent element of the all-solid-state battery. All-solid-state batteries are currently intensive research targets, and are made of various materials 7 such as lithium oxide and carbon, though examples of the materials 7 are obviously unlimited thereto. The powdery material 7 as a raw material as well as the molded product obtained by compression molding the powdery material 7 preferably avoid coming into contact with outdoor air as much as possible. The powdery material 7 may react with oxygen or moisture in the air. The powdery material 7 also needs to avoid leaking outside. Also in a case where the molded product thus manufactured is tested in terms of quality and performance, the molded product as a test target is preferred not to come into contact with outdoor air.

In view of this, the isolator unit 1
- has external size and weight appropriate for being manually brought into an existing glove box (not shown),
- enables work of filling the die 3 with the powdery material 7 in the glove box,
- allows the powdery material 7 having been filled in the die 3 to be discharged from the glove box and be pressurized to be compressed by means of an existing compressor 6,
- can keep a state of pressurizing to compress the powdery material 7 in the die 3 for at least several hours without use of the compressor 6,
- allows the powdery material 7 to be brought into the glove box again and allows the molded product thus completed to be ejected from the die 3, and can subsequently transition to an evaluation test of the molded product in the glove box.

The housing 11 of the isolator unit 1 includes side walls 112 standing on left and right sides to face each other, a top wall 111 firmly fixed to upper ends of the side walls 112, and a bottom wall 113 firmly fixed to lower ends of the side walls 112, and the side walls 112, the top wall 111, and the bottom wall 113 form a quadrilateral shape opened in the front-to-back direction. The left and right side walls 112 each include a handle 16 to be gripped with a human hand. The housing 11 has front and rear ends respectively equipped with openable doors 12 configured to close the openings of the housing 11.

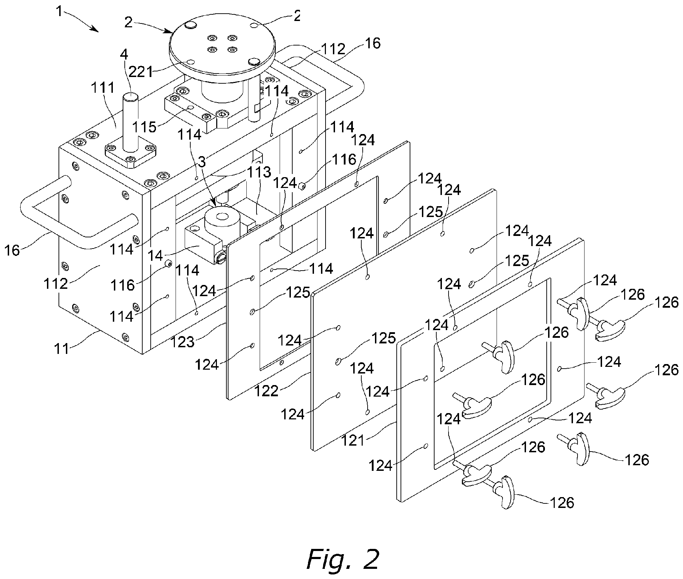

As shown in an exploded view in Fig. 2, each of the doors 12 includes an outer plate 121 having a penetrating window positioned in the center, a transparent window plate 122 positioned behind the outer plate 121, and a sealing member 123 positioned behind the window plate 122 and having a penetrating window positioned in the center and configured similarly to the window in the outer plate 121. The outer plate 121, the window plate 122, and the sealing member 123 are substantially equal in vertical size and transverse width size. The sealing member 123 is positioned between the window plate 122 and an end surface of the housing 11 that is directed from front to back to seal the window plate 122 and the end surface.

The outer plate 121, the window plate 122, and the sealing member 123 have outer peripheries respectively including pluralities of insertion through holes 124 positioned to be overlapped with one another in the front-to-back direction and penetrating from front to back. In addition, the outer peripheries of the window plate 122 and the sealing member 123 respectively include pluralities of through holes 125 positioned to be overlapped with one another in the front-to-back direction and penetrating from front to back. Meanwhile, the end surface of the housing 11 that is directed from front to back includes nut holes 114 correspondingly to the pluralities of insertion through holes 124. The end surface of the housing 11 further includes projections (bosses) 116 correspondingly to the pluralities of through holes 125.

A fixing tool 126 provided to bring the door 12 into intimate contact with the housing 11 has a shaft portion including a screw thread to be screwed to each of the nut holes 114 of the housing 11. When the outer plate 121, the window plate 122, and the sealing member 123 are stacked from front to back in the mentioned order and are brought into contact with the end surface of the housing 11, the projections 116 of the housing 11 are inserted to be engaged with the through holes 125 of the window plate 122 and the sealing member 123 for positional alignment, and the shaft portions of the plurality of fixing tools 126 are inserted from the outer plate 121 through the insertion through holes 124 of the outer plate 121, the window plate 122, and the sealing member 123 to be screwed into the nut holes 114 of the housing 11 to be secured, the doors 12 can be firmly fixed to the housing 11 to isolate the internal space of the housing 11 from outside.

The compression rod 2 includes a shaft body 21 supported to be movable upward and downward by the top wall 111 of the housing 11, a top plate 22 larger in outer diameter than the shaft body 21 and firmly fixed to a proximal end or an upper end of the shaft body 21, and the upper punch 24 in contact with a distal end or a lower end of the shaft body 21 via an insulator 23, so that the upper punch 24 can be pressed. The shaft body 21 extends vertically, is inserted through a bush 13 disposed at the top wall 111 of the housing 11, and slides with respect to the bush 13. The shaft body 21 has an intermediate portion and the lower end that are positioned in the internal space of the housing 11, and the upper punch 24 in contact with the lower end via the insulator 23 faces from above a bore (of a die member 31) to be filled with the powdery material 7 in the die 3. The top plate 22 at the upper end of the shaft body 21 is pressed by the external compressor 6. The top plate 22 includes a plurality of insertion through holes 221 penetrating vertically. In contrast, the top wall 111 of the housing 11 has an upward surface including nut holes 115 corresponding respectively to the insertion through holes 221 at positions overlapped with the insertion through holes 221 in a planar view.

A guide shaft 4 extends vertically so as to be substantially in parallel with the shaft body 21 of the compression rod 2, and is supported to be movable upward and downward by the top wall 111 of the housing 11. More specifically, the guide shaft 4 is inserted through a bush 15 disposed at the top wall 111 of the housing 11, and slides with respect to the bush 15. The guide shaft 4 is coupled to the shaft body 21 of the compression rod 2 via a coupling member 5, and moves integrally with the compression rod 2.

The die 3 is located right below the compression rod 2 and the upper punch 24 in the internal space surrounded with the housing 11 and the doors 12. The die 3 includes the die member 31 having a tubular shape and including a vertically penetrating die bore into which a lower punch 32 is fitted from below, and an insulator 33 laid below the lower punch 32. The die member 31, the lower punch 32, and the insulator 33 are retained by a die guide 14 disposed on an upward surface of the bottom wall 113 of the housing 11. The die member 31 and the lower punch 32 are detachable from the die guide 14 so as to be replaceable. The upper punch 24 is also replaceable, and an appropriate set of the upper punch 24, the die member 31, and the lower punch 32 can be selected for use in accordance with the type or size of the molded product to be manufactured.

The die member 31 is made of a ceramic such as alumina (aluminum oxide) having high electrical insulation properties and high mechanical strength. The same applies to the insulators 23 and 33. Accordingly, the powdery material 7 in the die bore and the molded product obtained by compressing the powdery material 7 are electrically insulated from the housing 11 made of a metal.

Description is made next to a method of using the isolator unit 1. The isolator unit 1 is initially brought into the glove box. The isolator unit 1 can be easily conveyed by gripping the handle 16. The doors 12 are detached from the housing 11 to release the internal space of the housing 11 inside the glove box (obviously isolated from outside). The die bore of the die member 31 located in the internal space of the housing 11 is filled with the powdery material 7 as a material for the molded product. The doors 12 are then firmly fixed to the housing 11 to close the internal space. In this case, the interior of the glove box is preliminarily filled with highly pure inert gas such as nitrogen or argon. Accordingly, the isolator unit 1 has an internal space also filled with the inert gas and such a state can be kept for a long period of time.

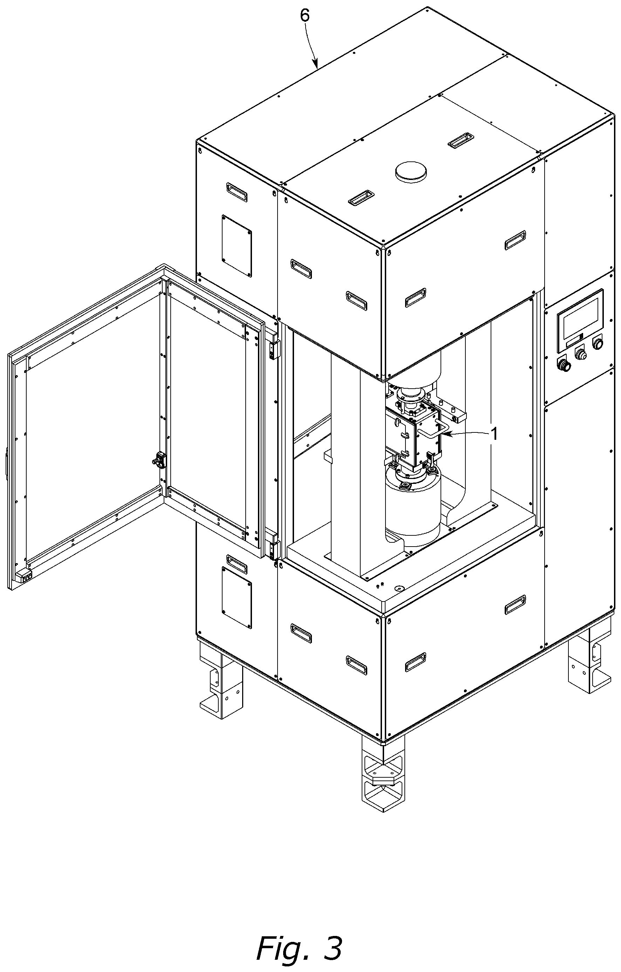

The isolator unit 1 is subsequently discharged from the glove box and is disposed in the compressor 6 as shown in Fig. 3. The compressor 6 is not particularly limited and has only to be configured to press the compression rod 2 of the isolator unit 1 from above to apply necessary pressure to the powdery material 7 in the die 3. Examples of the compressor 6 to be adopted can include those disclosed in the prior art documents listed above. As shown in Fig. 5, the compressor 6 presses the top plate 22 of the compression rod 2, the upper punch 24 is fitted from above into the die bore of the die member 31, and the upper punch 24 and the lower punch 32 being paired compress the powdery material 7 in the die bore. If the guide shaft 4 is equipped with a linear gauge, the linear gauge can measure a distance between the upper punch 24 and the lower punch 32, in other words, thickness of the molded product molded in the die 3, or the thickness of the molded product can be appropriately controlled.

In the state where the compressor 6 pressurizes the powdery material 7, the fixture 222 is further inserted through each of the insertion through holes 221 from above the top plate 22 of the compression rod 2. The fixture 222 includes a shaft portion having a screw thread to be screwed to each of the nut holes 115 in the top wall 111 of the housing 11. When the fixture 222 is screwed from the top plate 22 into each of the nut holes 115 of the housing 11 to be secured, the compression rod 2 can be fixed to the housing 11 to keep the state where the upper punch 24 and the lower punch 32 being paired continuously compress the powdery material 7 with necessary pressure without relying on the compressor 6.

The isolator unit 1 is thus ejected from the compressor 6 to continuously pressurize and compress the powdery material 7 for a necessary period of time. The embodiment assumes a constituent element of an all-solid-state battery as the molded product, and the isolator unit 1 is configured to keep compressing for at least several hours. Adopting the isolator unit 1 does not need to continuously place the compressor 6 for the at least several hours and achieves improved manufacture efficiency of the molded product.

The internal space of the isolator unit 1 is filled with the inert gas as described earlier, but the isolator unit 1 may not necessarily exhibit sufficient sealing properties. In this case, the inert gas may slightly leak out of the isolator unit 1, and outdoor air may slightly enter the isolator unit 1. However, when the compression rod 2 is fixed to the housing 11 with use of the fixture 222, the punches 24 and 32 and the die member 31 keep the powdery material 7 as a material for the molded product or the molded product in an almost hermetically sealed state. Accordingly, the powdery material 7 or the molded product is exposed to outdoor air to be degenerated slightly enough to be ignorable, and the powdery material leaks out of the isolator unit 1 slightly enough to be ignorable. The housing 11 or each of the doors 12 may include a pore equipped with a check valve for injection and supplement of inert gas into the internal space from outside.

The isolator unit 1 is eventually brought into the glove box again. In the glove box, the fixture 222 is detached from each of the nut holes 115 of the housing 11 and is ejected from each of the insertion through holes 221 of the top plate 22. The doors 12 are also detached from the housing 11 to release the internal space of the housing 11 and extract the molded product completed in the die 3 inside the glove box. It is possible to subsequently execute a test of the molded product, measurement of properties, and the like inside the glove box.

The embodiment provides the isolator unit 1 including: the housing 11 enclosing the internal space; the door 12 configured to close the opening of the housing 11 to isolate the internal space of the housing 11 from outside; the die 3 disposed in the internal space of the housing 11 and filled with the powdery material 7; the punch 24 disposed in the internal space of the housing 11 and fitted into the die 3; the compression rod 2 inserted to the internal space of the housing 11 and including the proximal end 22 exposed from the housing 11 to receive pressure applied from the separately provided compressor 6, and the distal end configured to compress the powdery material 7 in the die 3 via the punch 24; and the fixture 222 configured to fix the proximal end 22 of the compression rod 2 to the housing 11 in the state where the proximal end 22 of the compression rod 2 is pressed by the separately provided compressor 6 to compress the powdery material 7 in the die 3 via the punch 24.

The embodiment achieves generally or substantially completely isolating from outside, the die 3 to be filled with the powdery material 7 and the punch 24 configured to compress the powdery material 7, to inhibit the powdery material 7 from being exposed to outdoor air and from leaking outside. Furthermore, the isolator unit can cause the punch 24 to appropriately compression mold the powdery material 7 in the die 3 by means of the external compressor 6, as well as can keep the state of compressing the powdery material 7 with use of the fixture 222 for a long period of time.

The invention is not limited to the embodiment detailed above. For example, the fixture 222 configured to fix the proximal end 22 of the compression rod 2 to the housing 11 is not limited to the bolt 222 configured to be screwed to each of the nut holes 115 of the housing 11, and may alternatively be a clamp or the like.

Moreover, specific configurations of the respective portions can be modified in various manners without departing from the spirit of the invention.

The invention provides an isolator unit including: a housing enclosing an internal space; a door configured to close an opening of the housing to isolate the internal space of the housing from outside; a die disposed in the internal space of the housing and filled with a powdery material; a punch disposed in the internal space of the housing and fitted into the die; a compression rod inserted to the internal space of the housing and including a proximal end exposed from the housing to receive pressure applied from a separately provided compressor, and a distal end configured to compress the powdery material in the die via the punch; and a fixture configured to fix the proximal end of the compression rod to the housing in a state where the proximal end of the compression rod is pressed by the separately provided compressor to compress the powdery material in the die via the punch.

## Claims

1. An isolator unit (1) comprising:
a housing (11) enclosing an internal space;
a door (12) configured to close an opening of the housing (11) to isolate the internal space of the housing (11) from outside;
a die (3) disposed in the internal space of the housing (11) and filled with a powdery material (7);
a punch (24) disposed in the internal space of the housing (11) and fitted into the die (3);
a compression rod (2) inserted to the internal space of the housing (11) and including a proximal end (22) exposed from the housing (11) to receive pressure applied from a separately provided compressor (6), and a distal end configured to compress the powdery material (7) in the die (3) via the punch (24); and
a fixture (222) configured to fix the proximal end (22) of the compression rod (2) to the housing (11) in a state where the proximal end (22) of the compression rod (2) is pressed by the separately provided compressor (6) to compress the powdery material (7) in the die (3) via the punch (24).

2. The isolator unit (1) according to claim 1, wherein the isolator unit is conveyable by a hand of a person and further comprises a handle (16) gripped by a person when conveyed.

3. The isolator unit (1) according to claim 1, further comprising a guide shaft (4) extending in parallel with the compression rod (2), integrally and firmly coupled to the compression rod (2), and slidable along with the compression rod (2) relatively to the housing (11).

4. The isolator unit (1) according to claim 1, wherein the housing (11) and the die (3) as well as the housing (11) and the punch (24) are electrically insulated.

5. The isolator unit (1) according to claim 4, wherein the powdery material (7) as a material for an all-solid-state battery is compressed to be molded in the die (3) in the internal space of the housing (11).
